# EUROPEAN PATENT SPECIFICATION

(11) **EP 1 857 260 B1**
(45) Date of publication and mention of the grant of the patent: **16.09.2015**
(21) Application number: 07251939.0
(22) Date of filing: 08.05.2007
(51) Int. Cl.: B29C 70/38, G01N 21/88, G01N 21/89, G01N 21/952, B29L 31/30

(54) **Systems and methods for monitoring automated composite fabrication processes**
System und Verfahren zum Überwachen automatisierter Vorgänge zur Herstellung von Verbundbauteilen
Systèmes et procédé de surveillance de processus de fabrication composite automatique

(30) Priority: 16.05.2006 US 383681
(43) Date of publication of application: 21.11.2007
(73) Proprietor: THE BOEING COMPANY, Chicago, IL 60606-2016 (US)
(72) Inventor: Savol, Andrej M., Sumner, Washington 98390 (US); Walton, Steven R., Buckley, Washington 98321 (US)
(74) Representative: Boult Wade Tennant

(56) References cited:
- EP-A- 1 334 819
- EP-A- 1 574 845
- US-A- 4 699 683
- US-A- 5 562 788
- US-A1- 2006 108 048
- US-A1- 2007 034 313
- US-A1- 2007 097 359

## Description

### FIELD OF THE INVENTION

This invention relates to systems and methods for monitoring automated composite fabrication processes, and more specifically, to systems and methods for monitoring automated, multi-head composite tape placement machines and the like.

### BACKGROUND OF THE INVENTION

Composite structures may be manufactured by progressively building up the structure with a plurality of layers of thin composite tape (or tow) laid one layer upon another. Typically, the operation begins by laying one or more tapes onto a tool or mandrel that has a configuration generally corresponding to the desired shape of the article to be produced. A tape placement head of a manufacturing system controllably moves over the surface of the tool, guiding and applying one or more tapes of composite material onto the tool. The head usually makes repeated passes over the tool in a defined pattern until the composite material is entirely collated, building up successive layers of the composite tape to form the desired workpiece. A compaction roller is typically used for pressing the tape against the workpiece, thereby facilitating adhesion of the successive layers. The workpiece may then be subjected to a curing process (e.g. heating) to further adhere and bond the composite layers. Conventional systems for forming composite structures using successive layers of tape include those systems disclosed, for example, in U.S. Patent Nos. 6,799,619 and 6,871,684.

Although desirable results have been achieved using such prior art systems, there may be room for improvement. For example, inspections to ensure the quality of the composite components manufactured using the above-described systems may require downtime which reduces the production rate and efficiency, and increases the overall cost, of the manufacturing process. Novel systems and methods which reduce or eliminate the downtime associated with monitoring and inspection during the manufacture of composite components would therefore have utility.

US 4,699,683 describes a multiroving fiber laminator that uses the output from laser cameras to control the position of dispensing heads.

US 5,562,788 describes a composite material laser flaw detection system for detecting flaws in composite materials after they are placed on a substrate.

WO 2007/021890, which is only citeable for novelty under Article 54(3) EPC, describes systems and methods for in-process vision inspection for automated machines are disclosed. In one embodiment, a head assembly includes a tool moveable over a workpiece and adapted to perform a manufacturing operation on the workpiece, and an inspection unit operatively positioned proximate the tool and moveable with the tool relative to the workpiece. The inspection unit is adapted to perform a vision inspection of a portion of the workpiece simultaneously with the performance of the manufacturing operation on the workpiece. In a particular embodiment, the inspection unit includes a camera adapted to monitor an area including the portion of the workpiece upon which the tool has performed the manufacturing operation, and a processor operatively coupled to the camera and adapted to receive an image from the camera and to analyze the image to determine a presence of a defect within the portion of the workpiece.

### SUMMARY OF THE INVENTION

The present invention is directed to systems and methods for monitoring automated composite fabrication processes. Embodiments of systems and methods in accordance with the present invention may advantageously perform in-process monitoring during automated composite fabrication processes, provide improved detection and characterization of manufacturing defects, and reduce downtime and associated costs in comparison with the prior art.

In one embodiment, a method includes performing a manufacturing operation on a portion of a workpiece using a tool moveable relative to the workpiece. Simultaneously with performing the manufacturing operation, the tool is translated relative to the workpiece, and a portion of the workpiece upon which the tool has performed the manufacturing operation is monitored. The monitoring includes illuminating an illuminated strip of the workpiece using a laser, and receiving a reflected beam reflected from the illuminated strip into a camera. Output signals from the camera may be analyzed to detect and characterize a feature of interest, wherein the feature of interest may include an edge, an overlap, a gap, a wrinkle, and foreign object debris (FOD).

### BRIEF DESCRIPTION OF THE DRAWINGS

Embodiments of the present invention are described in detail below with reference to the following drawings.
FIGURE 1 is an isometric view of a system for manufacturing composite components in accordance with an embodiment of the invention;
FIGURE 2 is an enlarged, side view of a head assembly of the manufacturing system of FIGURE 1 in accordance with an embodiment of the invention;
FIGURE 3 is an enlarged, isometric view of a monitoring unit of the head assembly of FIGURE 2;
FIGURE 4 is a side cross-sectional view of the monitoring unit of FIGURE 3 in accordance with an embodiment of the invention;
FIGURE 5 is a top view of the monitoring unit of FIGURE 4;
FIGURE 6 is a flowchart showing a method of performing manufacturing operations in accordance with an embodiment of the invention;
FIGURE 7 is a schematic representation of output from the monitoring unit of FIGURES 4 and 5 in accordance with an embodiment of the invention; and
FIGURE 8 is a display of actual monitoring data provided by the monitoring unit of FIGURES 4 and 5 in accordance with an embodiment of the invention.

### DETAILED DESCRIPTION

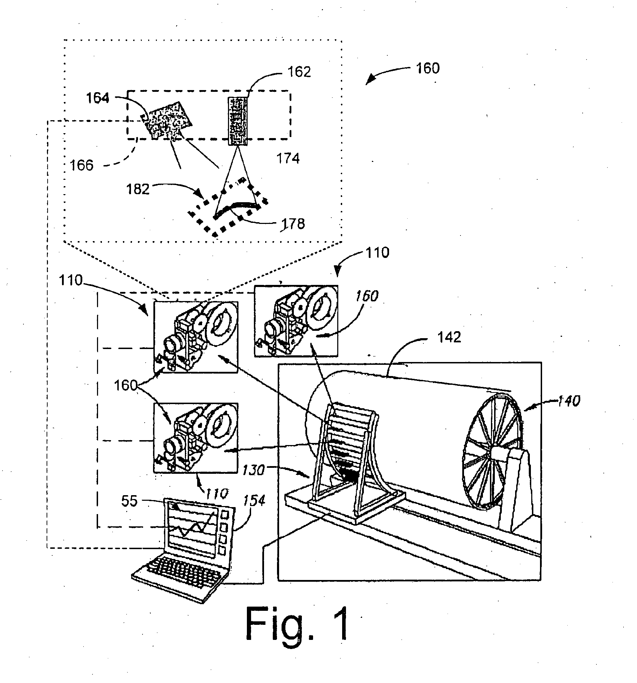

The present invention relates to systems and methods for monitoring automated composite fabrication processes. Many specific details of certain embodiments of the invention are set forth in the following description and in FIGURES 1 through 8 to provide a thorough understanding of such embodiments. One skilled in the art, however, will understand that the present invention may have additional embodiments, or that the present invention may be practiced without several of the details described in the following description.

Generally, embodiments of systems and methods in accordance with the present invention provide a laser-scanning monitoring unit operatively coupled with a head assembly that is configured to perform a desired manufacturing operation, such as applying a fiber-reinforced composite tape onto a tool to form a composite laminate workpiece. The laser-scanning monitoring unit advantageously moves with the head assembly and performs monitoring during the performance of the manufacturing operation by the head assembly. Thus, embodiments of the invention may advantageously reduce the labor and expense associated with monitoring and inspecting during manufacturing operations, and may provide improved detection and characterization of various features of interest, including composite tape edges, gaps and overlaps between successive courses of composite tape, tape wrinkles, and foreign object debris (FOD). Overall, embodiments of the invention may improve production rates and efficiencies, and reduce manufacturing costs, in comparison with prior art systems and methods.

FIGURE 1 is an isometric view of a system 100 for manufacturing composite components in accordance with an embodiment of the invention. In this embodiment, the system 100 includes a plurality of head assemblies 110 coupled to a translation platform 130 and operatively positioned proximate a forming tool (or mandrel) 140. The translation platform 130 is configured to systematically move the head assemblies 110 along translation paths (*e.g.* three-dimensional paths) proximate the forming tool 140, and each head assembly 110 is configured to perform placement and consolidation of a fiber-reinforced composite tape material onto the forming tool 140 to produce a laminated composite workpiece 142, as described more fully below. Each head assembly 110 a monitoring unit 160 configured to perform in-process inspections of the manufacturing processes (in this case, composite tape application processes) performed by the head assembly 110. Structural and operational features of the monitoring unit 160 are described more fully below.

In the embodiment shown in FIGURE 1, the system 100 includes a computer (or controller) 154 operatively coupled to the translation platform 130 and to the head assemblies 110. The computer 154 is configured to implement a control code that transmits control signals to the translation platform 130 and the head assemblies 110. The control signals command the movement and functions of the translation platform 130 and the head assemblies 110, thereby causing automated (or semi-automated) manufacturing of the laminated composite workpiece 142 on the forming tool 140. In the embodiment shown in FIGURE 1, the manufacturing system 100 is of a type known as a multi-head tape lamination machine (MHTLM). In one specific embodiment, the system 100 includes eight head assemblies 110 for the placement of composite tape, however, in alternate embodiments, any desired number of head assemblies 110 may be employed.

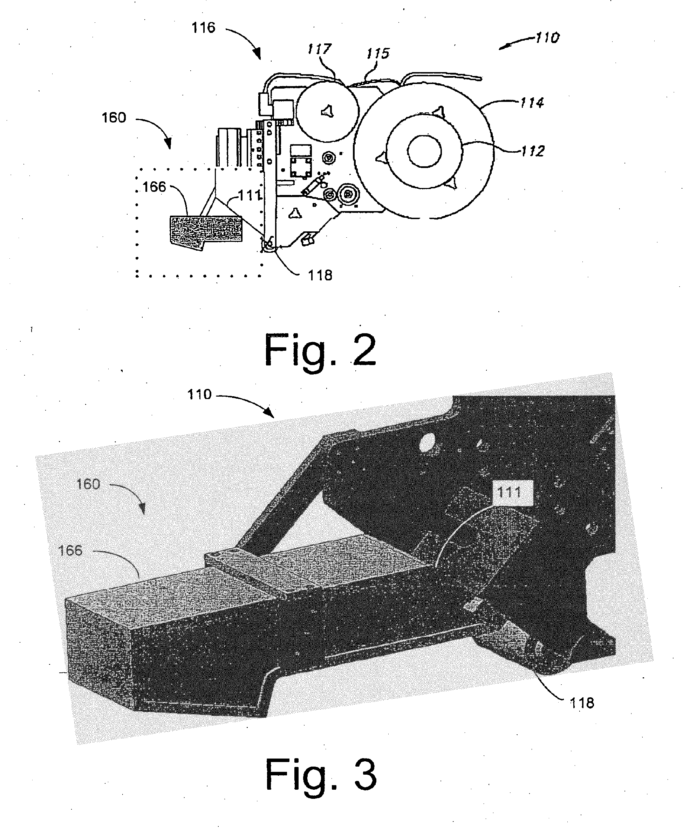

FIGURE 2 is an enlarged, side view of the head assembly 110 of the manufacturing system 100 of FIGURE 1. In this embodiment, the head assembly 110 includes a spindle 112 configured to retain a roll 114 of a fiber-reinforced composite tape 115, and a feed assembly 116 configured to receive, guide, feed, and apply the tape 115 from the roll 114 onto the workpiece 142. More specifically, the feed assembly 116 includes a feed roller 117 that receives the tape 115 from the roll 114, and a compaction roller 118 that applies and compresses the tape 115 onto the workpiece 142. The feed assembly 116 may include a variety of other components (*e.g.* motors, rollers, guides, sensors, etc.) configured to cooperatively receive, feed, and guide the tape 115 from the roll 114 to the compaction roller 118, as described more fully, for example, in U.S. Patent Nos. 6,799,619 and 6,871,684, as well as in commonly-owned U.S. Patent Application Publication No. 2003/0102070.

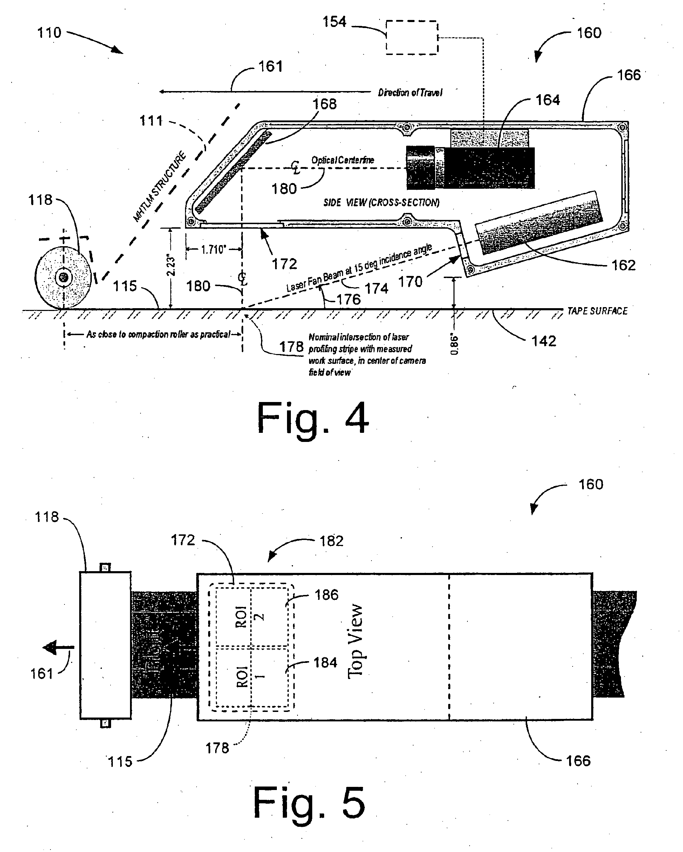

FIGURE 3 is an enlarged, isometric view of the monitoring unit 160 of the head assembly 110 of FIGURE 2. FIGURE 4 is a side cross-sectional view of the monitoring unit 160 of FIGURE 3. As best shown in FIGURE 3, the monitoring unit 160 includes two side-by-side laser fan-beam projectors 162 and a camera 164 disposed within a housing 166. The housing 166 is coupled to a structural portion 111 of the head assembly 110 proximate to the compaction roller 118, and includes first and second apertures 170, 172. A mirror 168 is positioned within the housing 166 proximate the second aperture 172. In one particular embodiment, the laser fan-beam projectors 162 are Lasiris Model MFL units commercially-available from Stocker Yale of Salem, New Hampshire, USA, and the camera 164 is a Model KP-M22A video camera, commercially-available from Hitachi Kokusai Electric Incorporated of Tokyo, Japan. In alternate embodiments, any suitable laser scanners or cameras may be used.

As best shown in FIGURE 4, as the head assembly 110 is traversed over the workpiece 142 in a direction of travel 161, the laser scanners 162 provide fan beams 174 that are projected through the first aperture 170 onto the composite tape 115 after the composite tape 115 has been applied to the workpiece 142 by the compaction roller 118. The fan beams 174 intersect the composite tape 115 at an incidence angle 176, and produce illuminated stripes 178 that extends laterally (or transversely) across the composite tape 115. In one particular embodiment, the incidence angle 176 is approximately 15 degrees, however, in alternate embodiments, incidence angles between approximately 10 degrees and approximately 35 degrees may be used. Alternately, any other suitable incidence angle may be used. As described more fully below, the monitoring unit 160 is configured to detect and characterize various features of interest (*e.g.* edges, gaps, wrinkles, puckers, overlaps, foreign object debris (FOD), etc.) along the illuminated stripes 178. Preferably, the monitoring unit 160 is positioned such that the illuminated stripes 178 are relatively close (*e.g.* as close as practical) to the compaction roller 118 so that features of interest may be detected relatively quickly in the manufacturing process.

As further shown in FIGURE 4, a reflected beam 180 reflects upwardly from the composite tape 115, passes into the housing 166 through the second aperture 172, and reflects from the mirror 168 to the camera 164. In one particular embodiment, the reflected beam 180 reflects approximately normally from the composite tape 115, however, in alternate embodiments, any other suitable reflection angle may be used. The camera 164 receives the reflected beam 180 and transmits data to the computer 154 for analysis and display.

FIGURE 5 is a top view of the monitoring unit 160 of FIGURE 4. In this embodiment, a field of view 182 of the camera 164 through the second aperture 172 is divided into first and second regions of interest (ROI) 184, 186, and the illuminated laser stripe 178 of each laser is approximately centered within each ROI field of view 182.

Communication between the monitoring units 160 and the computer 154, or between any of the other various components of the system 100 (*e.g.* between the computer 154 and the translation platform 130, assembly heads 110, etc.), may be accomplished by standard Ethernet connections, or alternately, by a custom network or server. Communication may also be achieved through a wireless network, including a wireless network that utilizes spread spectrum RF to overcome sources of interference in a typical factory environment.

The computer 154 may be configured to analyze the data provided by the camera 164 to determine whether any features of interest are present, and if so, may characterize such features of interest into various categories including, for example, edges, gaps, wrinkles, overlaps, and various types of FOD. The computer 154 may be further configured to perform various functions based on the results of the detection and characterization of a feature of interest, including displaying the data from the camera 164 via a display 155 (FIGURE 1), identifying the feature of interest, notifying an operator, recording information regarding the feature of interest (*e.g.* location, type, etc.), and if needed, halting manufacturing operations to permit further inspection and remedial action.

More specifically, the computer 154 may receive and maintain a running display of images (both with and without possible features of interest) from the camera 164 of the monitoring unit 160. For multiple head assemblies 110, this may be accomplished by a split screen display that shows the view from each head assembly 110 simultaneously in discrete windows on the display 155. Alternately, the view from each head assembly 110 may be displayed individually through selection of that head assembly 110 from a list by an operator.

To analyze the data provided by the monitoring units 160, the computer 154 may use a variety of suitable methods and algorithms for detecting, analyzing, and characterizing features of interest, and for taking appropriate action based on the results of such analyses. For example, in some embodiments, the computer 154 may be configured to perform one or more of the methods and algorithms disclosed in U.S. Patent No. 6,871,684, as well as those methods and algorithms disclosed in the following commonly-owned patent and published applications: U.S. Patent No. 7,171,033 and U.S. Patent Application Publication Nos. 2006/0117793, 2006/0109454, and 2006/0108048.

Generally, any of the methods described herein can be implemented using software, firmware (*e.g.*, fixed logic circuitry), hardware, manual processing, or any combination of these implementations. The terms "module," "functionality," and "logic" generally represent software, firmware, hardware, or any combination thereof. In the case of a software implementation, the module, functionality, or logic represents program code that performs specified tasks when executed on processor(s) (*e.g.*, any of microprocessors, controllers, and the like). The program code can be stored in one or more computer readable memory devices. Further, the methods and systems described herein are platform independent such that the techniques may be implemented on a variety of commercial computing platforms having a variety of processors.

Furthermore, one or more of the methods disclosed herein may be described in the general context of computer executable instructions. Generally, computer executable instructions can include routines, programs, objects, components, data structures, procedures, modules, functions, and the like that perform particular functions or implement particular abstract data types. The methods may also be practiced in a distributed computing environment where functions are performed by remote processing devices that are linked through a communications network. In a distributed computing environment, computer executable instructions may be located in both local and remote computer storage media, including memory storage devices. For example, in alternate embodiments, one or more of the above-noted operations of the computer 154 may be distributed to one or more separate processing units, such as processing units installed within each assembly head 110, or within each monitoring unit 160, or any other suitable arrangement.

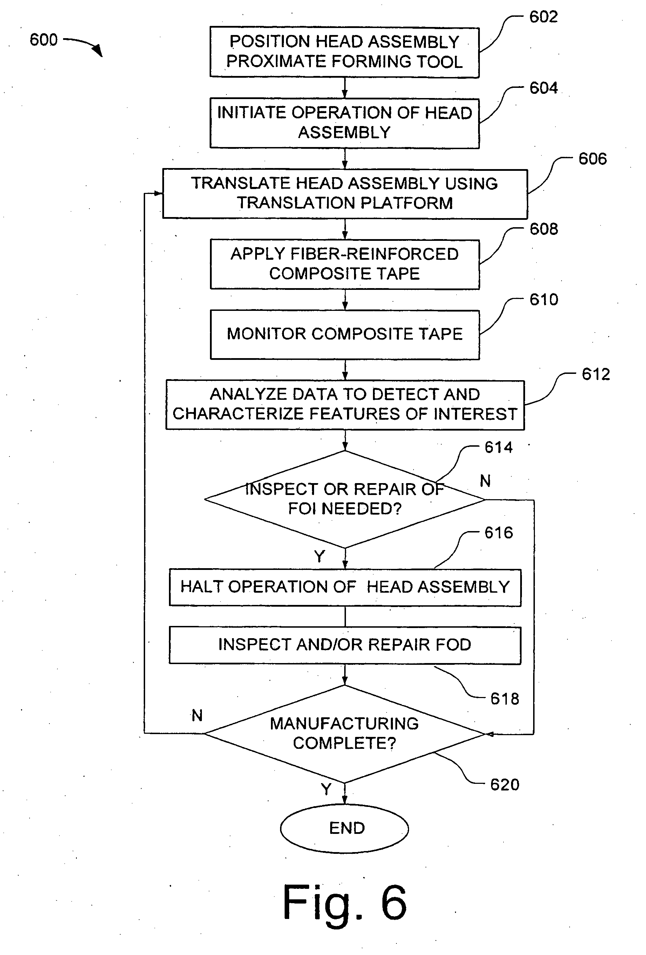

FIGURE 6 is a flowchart showing a method 600 of performing manufacturing operations in accordance with an embodiment of the invention. The order in which the method is described is not intended to be construed as a limitation, and any number of the described method blocks can be combined in any order to implement the method, or an alternate method. Furthermore, the method can be implemented in any suitable hardware, software, firmware, or combination thereof.

In this embodiment, the method 600 includes positioning at least one head assembly 110 proximate the forming tool 140 at a block 602, initiating operation of the head assembly 110 at a block 604, and translating the head assembly 110 using the translation platform 130 at a block 606. At a block 608, the fiber-reinforced composite tape 115 is applied, either directly to the forming tool 140 or to the previously-applied layers of the workpiece 142. The application of the composite tape 115 (block 608) preferably occurs simultaneously with the translation of the head assembly 110 (block 606).

At a block 610, the composite tape 115 is monitored (*e.g.* at a location proximate to the compaction roller 118) by scanning the fan beams 174 onto the composite tape 115, and capturing the reflected beams 180 using the camera 164. The monitoring of the manufacturing operation (block 610) preferably occurs simultaneously with the performance of the manufacturing operation (block 608). In alternate embodiments, however, the monitoring may occur subsequent to the manufacturing operation, such as by performing a follow-up sweep over a portion of composite tape 115 (*e.g.* a course) using the monitoring unit 160 after each portion has been applied.

As further shown in FIGURE 6, at a block 612, the data provided by the monitoring unit 160 are analyzed in an attempt to detect and characterize any features of interest that may be present in the illuminated stripes 178. The analysis of the data from the monitoring unit (block 612) preferably occurs simultaneously with the performance of the monitoring (block 610) during the manufacturing operation (block 608). In alternate embodiments, however, the analysis may occur subsequent to the monitoring, such as by post-processing the data after the monitoring is performed over a portion of composite tape 115.

At a block 614, a determination is made regarding whether a feature of interest that has been detected during the analysis of the data (block 612) merits further inspection or possible remedial action (*e.g.* repair). If so, then the manufacturing operation (*e.g.* the operation of the head assembly 110, translation assembly 130, etc.) may be halted at a block 616, and the further inspection, remedial action, or both are performed at a block 618. After the required actions are performed at block 618, or if it is determined at block 614 that the feature of interest does not require further inspection or remedial action, the method 600 determines whether manufacturing operations are complete at a block 620. If manufacturing operations are not complete, then the method 600 returns to block 606 and continues the above-described actions. Alternately, if manufacturing operations are complete, then the method 600 ends or continues to other actions.

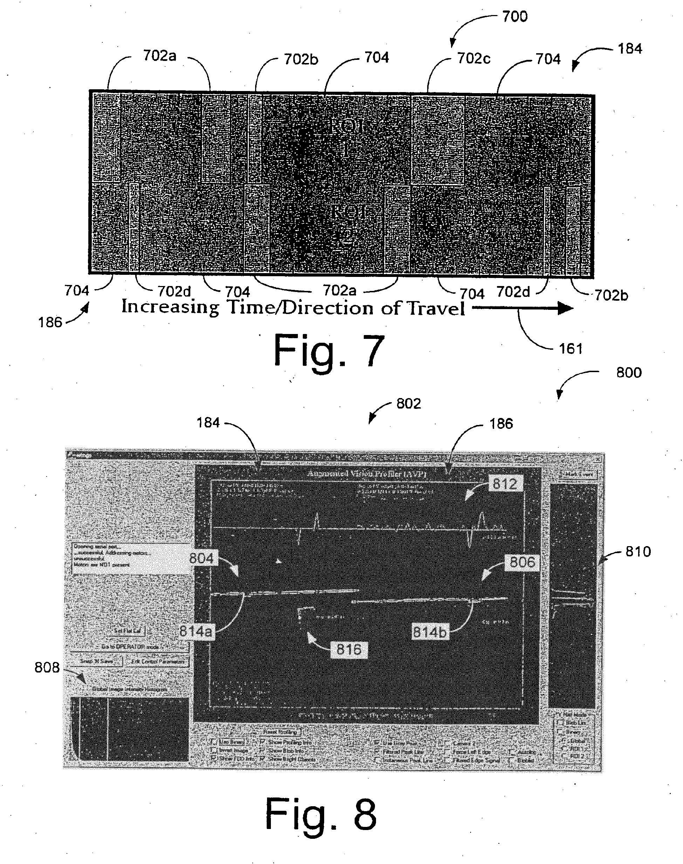

FIGURE 7 is a schematic representation of output 700 from the monitoring unit 160 of FIGURES 4 and 5. In this embodiment, data acquired by the camera 164 within the first and second regions of interest 184, 186 are displayed as a function of time (or direction of travel 161) during monitoring of a composite tape application process. In the first and second regions of interest 184, 186, both positive data segments 702 indicating the presence of features of interest, and negative data segments 704 indicating the absence of features of interest, as shown. More specifically, the positive data segments 702 are categorized into different types of positive segments 702a, 702b, 702c, 702d, 702e having different characteristics indicative of different types of features of interest. In the schematic representation shown in FIGURE 7, the different types of positive segments 702a-e are represented as having different widths, however, in alternate embodiments, the different types of positive segments 702a-e may be categorized and distinguished using any distinguishing characteristic or set of characteristics, including, for example, intensity, size, spectral diversity, or any other suitable characteristic.

FIGURE 8 is a display 800 of actual monitoring data provided by the monitoring unit 160. In this embodiment, the display 800 includes a "real time" view 802 from the camera 164 that includes the first and second regions of interest 184, 186 (FIGURE 5). First and second portions 804, 806 of the illuminated strip 178 are displayed within the first and second regions of interest 184, 186, respectively. The first and second portions 804, 806 may be used to detect and characterize features of interest, including edges, gaps, wrinkles, overlaps, and various types of FOD conditions. In addition, the positions of the first and second portions 804, 806 reflect gross height above the mandrel 140, and thus, the thickness of the workpiece 142.

A horizontal plot 812 is the output of a step detector module that analyzes the first and second portions 804, 806 of the illuminated strip 178 and may locate various features of interest, including edges of composite tape 115, and overlaps and gaps between successive courses of composite tape 115. In one embodiment, the step detector module operates upon the difference between a calibrated flat and a center of mass of the portions 804, 806 for each raster column of the image 802. In the display 800 shown in FIGURE 8, a gap 814b has been detected in the second region of interest 186, while a gap 814a and a FOD 816 have been detected in the first region of interest 184.

Various other output signals may be displayed, depending on the operating parameters and the desired elements that are selected by the dialog checkboxes seen along the bottom of the display 800. On the lower left of the display 800 is a global image intensity histogram 808, which displays the distribution of image pixel values and the two thresholds that are used in a binarization phase of the image processing. A second histogram 810 is shown on the right side of the display 800, representing a vertical projection of pixel values.

Embodiments of systems and methods in accordance with the present invention may provide significant advantages over the prior art. For example, because the head assembly 110 includes its own dedicated monitoring unit 160 for performing inspections, in-process inspections may be performed simultaneously on different regions of the workpiece 142 as the head assemblies 110 are simultaneously performing manufacturing operations. The monitoring units 160 advantageously reduce downtime of the manufacturing system 100 by reducing or eliminating the need to shift inspection hardware between head assemblies 110. Thus, embodiments of the invention may advantageously reduce the labor and expense associated with monitoring and inspecting during manufacturing operations, and may provide improved detection and characterization of various features of interest, including composite tape edges, gaps and overlaps between successive courses of composite tape, tape wrinkles, and foreign object debris (FOD). Overall, embodiments of the invention may improve production rates and efficiencies, and reduce manufacturing costs, in comparison with prior art systems and methods.

Embodiments of the invention may be used in a wide variety of manufacturing applications for manufacturing a wide variety of components for a wide variety of products. For example, in the manufacturing system 100 shown in FIGURE 1, the forming tool 140 is configured for forming an elongated, tubular workpiece 142. In one specific embodiment, the workpiece 142 is a fuselage portion of an airplane, such as the 787 passenger aircraft commercially-available from The Boeing Company of Chicago, Illinois. It will be appreciated, however, that alternate embodiments of the invention may be employed for the manufacture of composite components for a variety of other products, including other components for commercial and military aircraft, rotary wing aircraft, missiles or other types of flight vehicles, as well as components for boats, automobiles, trucks and other types of terrestrial vehicles, and any other desired structures.

Furthermore, although the disclosed embodiments have been described as being configured for the application and collation of fiber-reinforced composite tape, it may be appreciated that in alternate embodiments, head assemblies having vision inspection units in accordance with the present invention may be equipped with other types of tools for performing other types of manufacturing operations. For example, in alternate embodiments, assemblies in accordance with the invention may include riveters, welders, wrenches, clamps, sanders, nailers, screw guns, mechanical and electromagnetic dent pullers, and virtually any other desired type of manufacturing tools and measuring instruments.

While preferred and alternate embodiments of the invention have been illustrated and described, as noted above, many changes can be made without departing from the spirit and scope of the invention. Accordingly, the scope of the invention is not limited by the disclosure of these preferred and alternate embodiments. Instead, the invention should be determined entirely by reference to the claims that follow.

## Claims

1. A system (100) for performing a manufacturing operation on a workpiece (142), comprising:
at least one head assembly (110) configured to perform the manufacturing operation on the workpiece; and
a translation platform (130) coupled to the at least one head assembly (110), the translation platform (130) being configured to operatively position the head assembly (110) proximate the workpiece (142) and to systematically move the head assembly (110) along a translation path proximate the workpiece (142), and wherein the head assembly (110) includes:
a tool moveable relative to the workpiece and configured to perform the manufacturing operation on the workpiece; and
a monitoring unit (160) operatively coupled to and moveable with the tool relative to the workpiece, the monitoring unit including:
a laser (162) configured to illuminate an illuminated strip of the workpiece (142) upon which the tool has performed the manufacturing operation, wherein the laser (162) comprises a laser scanner and the illuminating beam comprises a fan beam;
a camera (164) configured to receive a reflected beam reflected from the illuminated strip;
a housing (166) operatively coupled to the tool, and a mirror disposed within the housing (166), the camera (164) being disposed within the housing (166), and the laser scanner being disposed within the housing (166) and configured to transmit the fan beam through a first aperture (170) in the housing (166), the housing having a second aperture (172) configured to receive the reflected beam, the reflected beam being further reflected by the mirror (168) to the camera (164); and
wherein the monitoring unit (160) is further configured to illuminate the illuminated strip and receive the reflected beam simultaneously with the performance of the manufacturing operation using the tool; and a computer (154) configured to receive output signals from the camera (164) indicative of the reflected beam, and to analyze the output signals to at least one of detect and characterize a feature of interest along the illuminated strip, wherein the feature of interest includes at least one of an edge, an overlap, a gap, a wrinkle, and foreign object debris (FOD).

2. The system of claim 1, wherein the tool is configured to perform an application of a composite tape (115) onto the workpiece (142), and wherein the monitoring unit (160) is configured to illuminate an illuminated strip of the composite tape (115).

3. The system of claim 2, wherein the tool includes:
a spindle (112) configured to support a supply of the composite tape (115); and
a feed assembly (116) configured to feed the composite tape from the supply to the workpiece (142), the feed assembly having a rotatable compaction roller configured to apply the composite tape onto the workpiece (142).

4. The system of claim 3, wherein the monitoring unit (160) is further configured to illuminate the illuminated strip using a fan beam emitted from a laser scanner, and wherein the camera (164) is further configured to transmit signals corresponding to the received reflected beam to a data analysis component.

5. The system of claim 1, wherein the computer (154) is operatively coupled to the translation platform (130) and to the head assembly (110), the computer (154) being configured to transmit control signals to the translation platform (130) and to the head assembly (110) to perform at least one of automated and semi-automated manufacturing operations.

6. A method of performing a manufacturing operation on a workpiece (142), comprising:
performing the manufacturing operation on a portion of the workpiece (142) using a tool moveable relative to the workpiece (142);
concurrently with performing the manufacturing operation, monitoring a portion of the workpiece (142) upon which the tool has performed the manufacturing operation, wherein the monitoring is performed using the apparatus of any of claims 1 through 5.

7. The method of claim 6, further comprising:
analyzing the output signals produced by the monitoring apparatus;
detecting a feature of interest;
characterizing the feature of interest;
determining that at least one of inspection and remedial action is required; and
halting the manufacturing operation.

## Patentansprüche

1. System (100) zur Durchführung eines Herstellungsvorgangs an einem Werkstück (142), wobei das System aufweist:
zumindest eine Kopfbaugruppe (110), die zur Durchführung des Herstellungsvorgangs an dem Werkstück ausgebildet ist, und eine Verschiebebühne (130), die mit der zumindest einen Kopfbaugruppe (110) verbunden ist, wobei die Verschiebebühne (130) dazu ausgebildet ist, die Kopfbaugruppe (110) funktionell in unmittelbarer Nähe des Werkstücks (142) zu Positionieren und die Kopfbaugruppe (110) systematisch entlang eines benachbart zum Werkstück (142) verlaufenden Verschiebewegs zu bewegen, und wobei die Kopfbaugruppe (110) aufweist:
ein Werkzeug, das relativ zum Werkstück bewegbar und zur Durchführung des Herstellungsvorgangs an dem Werkstück ausgebildet ist, und
eine Beobachtungseinheit (160), die mit dem Werkzeug funktionell verbunden ist und mit diesem relativ zum Werkstück bewegt werden kann, wobei die Beobachtungseinheit aufweist:
einen Laser (162), der zum Beleuchten eines angestrahlten Streifens des Werkstücks (142) ausgebildet ist, an dem das Werkzeug den Herstellungsvorgang durchgeführt hat, wobei der Laser (162) einen Laserscanner aufweist und der Beleuchtungsstrahl einen Fächerstrahl aufweist,
eine Kamera (164), die zum Empfangen eines reflektierten Strahls ausgebildet ist, der von dem angestrahlten Streifen reflektiert wurde,
ein Gehäuse (166), das mit dem Werkzeug funktionell verbunden ist und einen innerhalb des Gehäuses (166) angeordneten Spiegel, wobei die Kamera (164) innerhalb des Gehäuses (166) angeordnet ist und der Laserscanner innerhalb des Gehäuses (166) angeordnet und dazu ausgebildet ist, den Fächerstrahl durch eine erste in dem Gehäuse (166) ausgebildete Öffnung (170) zu leiten, wobei das Gehäuse eine zweite Öffnung (172) aufweist, die zum Empfangen des reflektierten Strahls ausgebildet ist, wobei der reflektierte Strahl ferner über den Spiegel (168) zur Kamera (164) reflektiert wird,
worin die Beobachtungseinheit (160) ferner zum Beleuchten des angestrahlten Streifens ausgebildet ist, sowie zum Empfangen des reflektierten Strahls zeitgleich zur Durchführung des Herstellungsvorgangs unter Verwendung des Werkzeugs, und einen Computer (154), der zum Empfang von Ausgangssignalen der Kamera (164) ausgebildet ist, die für den reflektierten Strahl repräsentativ sind, sowie zum Analysieren der Ausgangssignale zum Erfassen und/oder Charakterisieren eines Merkmals von Interesse entlang des angestrahlten Streifens, wobei das Merkmal von Interesse eine Kante und/oder eine Überlappung und/oder eine Spalte und/oder eine Falte und/oder Fremdkörperablagerung (FOD: foreign object debris) umfasst.

2. System nach Anspruch 1, worin das Werkzeug ausgebildet ist, ein Aufbringen eines Verbundmaterialbands (115) auf das Werkstück durchzuführen, und worin die Beobachtungseinheit (160) zum Beleuchten eines angestrahlten Streifens des Verbundmaterialbands (115) ausgebildet ist.

3. System nach Anspruch 2, worin das Werkzeug aufweist:
eine Spindel (112), die zum Halten eines Vorrats an Verbundmaterialband (115) ausgebildet ist, und
eine Zufuhranordnung (116), die zum Zuführen des Verbundmaterialbandes aus dem Vorrat zum Werkstück (142) ausgebildet ist, wobei die Zufuhrvorrichtung eine drehbare Verdichtungswalze aufweist, die zum Auftragen des Verbundmaterialbandes auf das Werkstück (142) ausgebildet ist.

4. System nach Anspruch 3, worin die Beobachtungseinheit (160) ferner dazu ausgebildet ist, den angestrahlten Streifen unter Verwendung eines von einem Laserscanner emittierten Fächerstrahls zu beleuchten, und worin die Kamera (164 ferner dazu ausgebildet ist, an eine Datenanalysekomponente dem empfangenen reflektierten Strahl entsprechende Signale zu senden.

5. System nach Anspruch 1, worin der Computer (154) mit der Verschiebebühne (130) und der Kopfbaugruppe (110) funktionell verbunden ist, wobei der Computer dazu ausgebildet ist, an die Verschiebebühne (130) und die Kopfbaugruppe (110) Steuersignale zu senden, um einen automatischen und/oder teilautomatischen Herstellungsvorgang durchzuführen.

6. Verfahren zur Durchführung eines Herstellungsvorgangs an einem Werkstück (142), wobei das Verfahren aufweist:
Durchführen eines Herstellungsvorgangs an einem Teil des Werkstücks (142) unter Verwendung eines relativ zu dem Werkstück (142) bewegbaren Werkzeugs,
Beobachten eines Teils des Werkstücks (142), an dem das Werkzeug den Herstellungsvorgang durchgeführt hat, zeitgleich zur Durchführung des Herstellungsvorgangs, wobei das Beobachten unter Verwendung der Vorrichtung nach einem der Ansprüche 1 bis 5 durchgeführt wird.

7. Verfahren nach Anspruch 6, das ferner aufweist:
Analysieren der von der Beobachtungsvorrichtung erzeugten Ausgangssignale,
Erfassen eines Merkmals von Interesse,
Charakterisieren des Merkmals von Interesse, Bestimmen, dass eine Inspektion und/oder schadensbehebende Maßnahme erforderlich ist, und
Unterbrechen des Herstellungsvorgangs.

## Revendications

1. Système (100) pour effectuer une opération de fabrication sur une pièce (142), comprenant :
au moins un ensemble de tête (110) configuré pour effectuer l'opération de fabrication sur la pièce ; et
une plateforme de translation (130) accouplée au dit au moins un ensemble de tête (110), la plateforme de translation (130) étant configurée pour positionner de manière fonctionnelle l'ensemble de tête (110) à proximité de la pièce (142) et pour déplacer systématiquement l'ensemble de tête (110) le long d'un trajet de translation à proximité de la pièce (142), et dans lequel l'ensemble de tête (110) comprend :
un outil pouvant être déplacé par rapport à la pièce et configuré pour effectuer l'opération de fabrication sur la pièce ; et
une unité de surveillance (160) accouplée de manière fonctionnelle à l'outil et pouvant être déplacée avec celui-ci par rapport à la pièce, l'unité de surveillance comprenant :
un laser (162) configuré pour éclairer une bande éclairée de la pièce (142) sur laquelle l'outil a effectué l'opération de fabrication, dans lequel le laser (162) comprend un dispositif de balayage de laser et le faisceau d'éclairage comprend un faisceau en éventail ;
une caméra (164) configurée pour recevoir un faisceau réfléchi qui a été réfléchi par la bande éclairée ;
un logement (166) accouplé de manière fonctionnelle à l'outil, et un miroir disposé dans le logement (166), la caméra (164) étant disposée dans le logement (166), et le dispositif de balayage de laser étant disposé dans le logement (166) et configuré pour transmettre le faisceau en éventail à travers une première ouverture (170) dans le logement (166), le logement comportant une deuxième ouverture (172) configurée pour recevoir le faisceau réfléchi, le faisceau réfléchi étant en outre réfléchi par le miroir (168) vers la caméra (164) ; et
dans lequel l'unité de surveillance (160) est en outre configurée pour éclairer la bande éclairée et recevoir le faisceau réfléchi simultanément avec l'exécution de l'opération de fabrication en utilisant l'outil ; et un ordinateur (154) configuré pour recevoir les signaux de sortie de la caméra (164) indicatifs du faisceau réfléchi, et pour analyser les signaux de sortie pour au moins l'une d'une détection et d'une caractérisation d'une caractéristique présentant un intérêt le long de la bande éclairée, dans lequel la caractéristique présentant un intérêt comprend au moins l'un d'un bord, d'une superposition, d'un espace, d'un pli et d'un débris d'objet étranger (FOD).

2. Système selon la revendication 1, dans lequel l'outil est configuré pour effectuer l'application d'une bande composite (115) sur la pièce (142), et dans lequel l'unité de surveillance (160) est configurée pour éclairer une bande éclairée de la bande composite (115).

3. Système selon la revendication 2, dans lequel l'outil comprend :
une broche (112) configurée pour supporter une réserve de la bande composite (115) ; et
un ensemble d'avance (116) configuré pour avancer la bande composite de la réserve à la pièce (142), l'ensemble d'avance comportant un rouleau de compression pouvant tourner configuré pour appliquer la bande composite sur la pièce (142).

4. Système selon la revendication 3, dans lequel l'unité de surveillance (160) est en outre configurée pour éclairer la bande éclairée en utilisant un faisceau en éventail émis par un dispositif de balayage de laser, et dans lequel la caméra (164) est en outre configurée pour transmettre des signaux correspondant au faisceau réfléchi reçu à un composant d'analyse de données.

5. Système selon la revendication 1, dans lequel l'ordinateur (154) est couplé de manière fonctionnelle à la plateforme de translation (130) et à l'ensemble de tête (110), l'ordinateur (154) étant configuré pour transmettre des signaux de commande à la plateforme de translation (130) et à l'ensemble de tête (110) pour effectuer au moins l'une d'opérations de fabrication automatisées et semi-automatisées.

6. Procédé d'exécution d'une opération de fabrication sur une pièce (142), comprenant :
l'exécution de l'opération de fabrication sur une partie de la pièce (142) en utilisant un outil pouvant être déplacé par rapport à la pièce (142) ;
simultanément à l'exécution de l'opération de fabrication, la surveillance d'une partie de la pièce (142) sur laquelle l'outil a effectué l'opération de fabrication, dans lequel la surveillance est effectuée en utilisant l'appareil selon l'une quelconque des revendications 1 à 5.

7. Procédé selon la revendication 6, comprenant en outre :
l'analyse des signaux de sortie produits par l'appareil de surveillance ;
la détection d'une caractéristique présentant un intérêt ;
la caractérisation de la caractéristique présentant un intérêt ;
la détermination qu'au moins l'une d'une inspection et d'une action de correction est nécessaire ; et
l'arrêt de l'opération de fabrication.
